# FASCICULE DE BREVET EUROPEEN

(11) **EP 2 914 476 B1**
(45) Date de publication et mention de la délivrance du brevet: **05.12.2018**
(21) Numéro de dépôt: 13779832.8
(22) Date de dépôt: 21.10.2013
(51) Int. Cl.: B62D 25/14, B62D 27/02, B23K 31/02

(54) **DISPOSITIF DE FIXATION ENTRE DEUX PIÈCES STRUCTURELLES À ÉLÉMENT DE POSITIONNEMENT FLOTTANT**
VORRICHTUNG ZUR BEFESTIGUNG ZWEIER BAUTEILE ANEINANDER MIT EINEM GLEITENDEN POSITIONIERUNGSELEMENT
DEVICE FOR ATTACHING TWO STRUCTURAL PARTS TO EACH OTHER, COMPRISING A FLOATING POSITIONING ELEMENT

(30) Priorité: 30.10.2012 FR 1260324
(43) Date de publication de la demande: 09.09.2015
(73) Titulaire: Renault S.A.S., 92100 Boulogne-Billancourt (FR)
(72) Inventeur: DE ALMEIDA, Luis Filipe, F-78650 Beynes (FR); DUONG, Olivier, F-95610 Eragny sur Oise (FR)
(86) Numéro de dépôt international: PCT/EP2013/071981
(87) Numéro de publication internationale: WO 2014/067808

(56) Documents cités:
- EP-A1- 1 332 950
- DE-A1-102009 024 084
- US-A- 5 387 023

## Description

### Domaine technique de l'invention

L'invention concerne un dispositif de fixation destiné à fixer une première pièce structurelle d'une structure d'un véhicule automobile, notamment une traverse de planche de bord, sur une deuxième pièce structurelle de cette structure, notamment une doublure de pied avant, le dispositif comprenant :
- un élément de renforcement, notamment en forme d'équerre, destiné à être fixé sur la deuxième pièce, notamment par soudage,
- un premier élément de positionnement lié à l'élément de renforcement et destiné à coopérer avec un deuxième élément de positionnement solidaire de la première pièce de sorte à faire occuper une position déterminée de la première pièce par rapport à la deuxième pièce,
- un élément de fixation destiné à immobiliser la première pièce dans ladite position déterminée.

L'invention a pour objet également un système et un procédé de montage, un agencement et un véhicule automobile en tant que tel.

### État de la technique

Le tableau de bord d'un véhicule automobile, encore appelé planche de bord, est soutenu par une traverse de planche de bord qui s'étend transversalement à l'habitacle du véhicule et relie les deux parties latérales avant de la carrosserie du véhicule, qui sont appelées les pieds avant. La traverse de planche de bord a, en outre, pour fonction éventuelle d'empêcher la rotation des pieds avant en cas de choc à leur niveau.

Il est connu, dans différents véhicules automobiles, la présence d'une équerre solidarisée d'une part à la traverse de planche de bord et d'autre part au pied avant. Cette liaison entre l'équerre et le pied avant est réalisée par une vis traversante associée à l'équerre et qui assure la limitation de la rotation du pied avant.

Pour améliorer la fixation de la traverse de planche de bord, par exemple en référence au document FR-A1-2850945, il est connu de prévoir des boitiers extérieur et intérieur soudés de part et d'autre d'une paroi du pied avant. L'extrémité de la traverse de planche de bord est fixée au boitier interne. Il est connu de prévoir sur l'un des boitiers un pion de réglage facilitant la mise en place de la traverse, avant sa fixation.

Une telle solution nécessite des pièces supplémentaires et encombrantes. Elle reste donc complexe, onéreuse et d'un poids perfectible.

Le document EP-B1-1253069 présente une alternative dans laquelle la traverse de planche de bord est équipée d'un système de réglage de son positionnement relativement à la structure du véhicule automobile.
Le document EP 1 332 950 A1 décrit un agencement pour un véhicule automobile selon le préambule de la revendication indépendante 1.

### Objet de l'invention

Le but de la présente invention est de proposer une solution de fixation d'une première pièce structurelle d'une structure d'un véhicule automobile, notamment une traverse de planche de bord, sur une deuxième pièce structurelle de cette structure, notamment une doublure de pied avant, qui remédie aux inconvénients listés ci-dessus.

Notamment, un objet de l'invention est de fournir un dispositif de fixation le plus économique possible, simple, peu encombrant et peu lourd mais qui permet malgré tout de conférer une fonction de réglage de positionnement relatif entre les deux pièces structurelles avant leur fixation.

Un premier aspect de l'invention concerne un dispositif de fixation destiné à fixer une première pièce structurelle d'une structure d'un véhicule automobile, constituant une traverse de planche de bord, sur une deuxième pièce structurelle de ladite structure, constituant une doublure de pied avant. Le dispositif de fixation comprend :
- un élément de renforcement, notamment en forme d'équerre, destiné à être fixé sur la deuxième pièce, notamment par soudage,
- un premier élément de positionnement lié à l'élément de renforcement et destiné à coopérer avec un deuxième élément de positionnement solidaire de la première pièce de sorte à faire occuper une position déterminée de la première pièce par rapport à la deuxième pièce,
- un élément de fixation destiné à immobiliser la première pièce dans ladite position déterminée.
Le dispositif de fixation est configuré de sorte que la liaison entre le premier élément de positionnement et l'élément de renforcement comprend un mécanisme de réglage en position configuré de sorte à varier entre un état de déblocage dans lequel la position du premier élément de positionnement par rapport à l'élément de renforcement est ajustable et un état de blocage dans lequel le premier élément de positionnement est fixe par rapport à l'élément de renforcement.

Le premier élément de positionnement est configuré de sorte à coopérer avec le deuxième élément de positionnement par un engagement réciproque suivant une première direction, notamment destinée à être orientée selon une direction longitudinale de la structure du véhicule automobile, et le mécanisme de réglage peut offrir une possibilité de débattement du premier élément de positionnement relativement à l'élément de renforcement dans au moins une deuxième direction différente de la première direction, notamment incluse dans un plan perpendiculaire à la première direction, permettant de compenser des défauts d'alignement perpendiculairement à la première direction entre les premier et deuxième éléments de positionnement au moment dudit engagement réciproque.

Le premier élément de positionnement comprendre un pilote de centrage venant en saillie d'un premier côté d'une paroi de l'élément de renforcement et configuré de sorte à pouvoir coopérer par engagement suivant la première direction dans un orifice de centrage correspondant au deuxième élément de positionnement.

Le mécanisme de réglage comprendre un élément de retenue du pilote de centrage sur l'élément de renforcement, l'élément de retenue étant monté flottant par rapport à l'élément de renforcement.

L'élément de retenue est constitué par un écrou en prise avec une partie filetée mâle du pilote de centrage. L'écrou est disposé dans un logement de réception présentant des dimensions, dans un plan parallèle à ladite paroi de l'élément de renforcement, telles que l'élément de retenue puisse se déplacer suivant une course déterminée dans le logement de réception suivant au moins une direction incluse dans ce plan.

Le logement de réception peut notamment être agencé d'un deuxième côté opposé de la paroi de l'élément de renforcement et l'élément de renforcement peut comprendre une lumière traversée par le pilote de centrage d'un côté à l'autre de la paroi.

Un deuxième aspect de l'invention concerne un système de montage qui comprend un tel dispositif de montage et une plaque de fixation destinée à être solidarisée à la première pièce, le deuxième élément de positionnement pouvant être formé dans ladite plaque de fixation. La plaque de fixation peut comprendre au moins un orifice de centrage dans lequel est engagé le premier élément de positionnement selon la première direction. L'élément de fixation peut être configuré de sorte à fixer la plaque de fixation sur l'élément de renforcement de manière démontable. La plaque de fixation peut comprendre au moins une ouverture et l'élément de fixation peut comprendre au moins un élément fileté mâle traversant ladite ouverture et coopérant avec un élément fileté femelle complémentaire solidaire de l'élément de renforcement.

L'invention concerne un agencement pour un véhicule automobile comprenant une première pièce structurelle d'une structure d'un véhicule automobile, constituant une traverse de planche de bord, une deuxième pièce structurelle de ladite structure, constituant une doublure de pied avant, et au moins un tel dispositif de fixation et/ou un tel système de montage, assurant la fixation de la première pièce sur la deuxième pièce.

La plaque de fixation du système de montage peut être solidaire de la première pièce et l'élément de renforcement est alors fixé, notamment par soudage, à la deuxième pièce.

Un quatrième aspect de l'invention concerne un véhicule automobile, comprenant au moins un tel agencement.

Un dernier aspect, qui n'est pas revendiqué, concerne un procédé de montage d'une première pièce structurelle d'une structure d'un véhicule automobile, notamment une traverse de planche de bord, sur une deuxième pièce structurelle de ladite structure, notamment une doublure de pied avant, comprenant les étapes :
- fourniture d'au moins un tel dispositif de fixation et/ou un tel système de montage,
- fixation de l'élément de renforcement sur la deuxième pièce, notamment par soudage,
- mise en place, le mécanisme de réglage en position étant à l'état de déblocage, d'un gabarit configuré de sorte à ajuster la position du premier élément de positionnement par rapport à l'élément de renforcement afin de le positionner à un emplacement tel qu'une coopération ultérieure desdits premier et deuxième éléments de positionnement fasse occuper ladite position déterminée de la première pièce par rapport à la deuxième pièce,
- actionnement du mécanisme de réglage vers son état de blocage.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective illustrant la partie gauche d'un agencement pour véhicule automobile utilisant un exemple de dispositif de fixation selon l'invention pour assurer la fixation de l'extrémité gauche de la première pièce structurelle,
- la figure 2 est une vue en perspective illustrant une partie du dispositif de fixation, à savoir l'élément de renforcement et le premier élément de positionnement, montée sur la deuxième pièce structurelle,
- la figure 3 est une vue en perspective illustrant une partie d'un autre dispositif de fixation en dehors du champ de l'invention, utilisé sur la partie droite de l'agencement pour assurer la fixation de l'extrémité droite de la première pièce structurelle,
- les figures 4 et 5 sont des vues respectivement avant et arrière de l'élément de renforcement et du premier élément de positionnement appartenant à l'exemple de dispositif de fixation selon l'invention utilisé aux figures 1 et 2,
- et les figures 6 et 7 sont des vues respectivement avant et arrière de l'élément de renforcement et d'un élément de positionnement appartenant au dispositif de fixation utilisé en figure 3.

### Description de modes préférentiels de l'invention

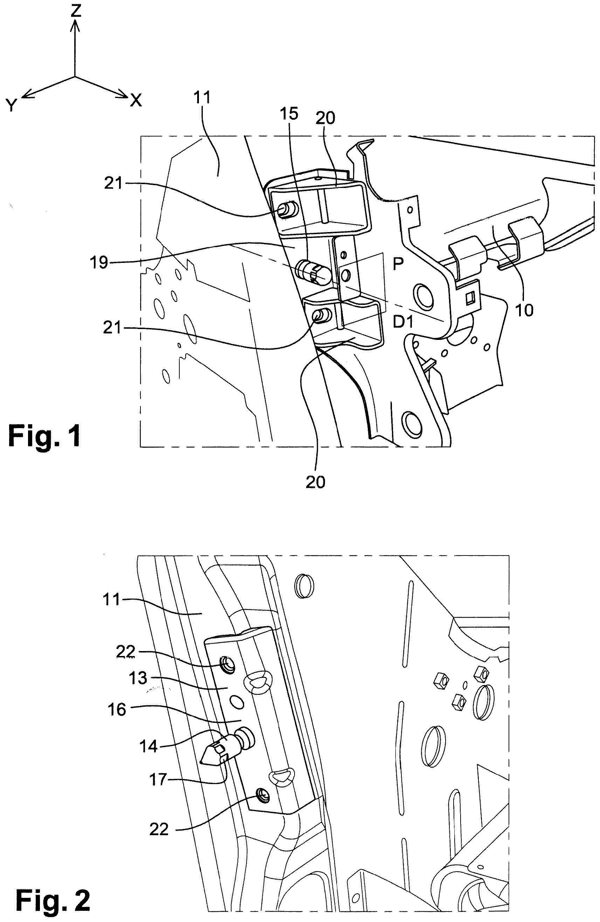

De manière générale et en référence aux figures 1, 2, 4 et 5, il est décrit dans la suite un dispositif de fixation destiné à fixer une première pièce 10 structurelle d'une structure d'un véhicule automobile, notamment une traverse de planche de bord, sur une deuxième pièce 11 structurelle de la structure, notamment une paroi intérieure ou doublure de pied avant. L'invention peut toutefois s'appliquer à tout type de première et deuxième pièces 10, 11 structurelles, quelle que soit leur nature, dès lors qu'elles nécessitent un positionnement précis relatif entre elles.

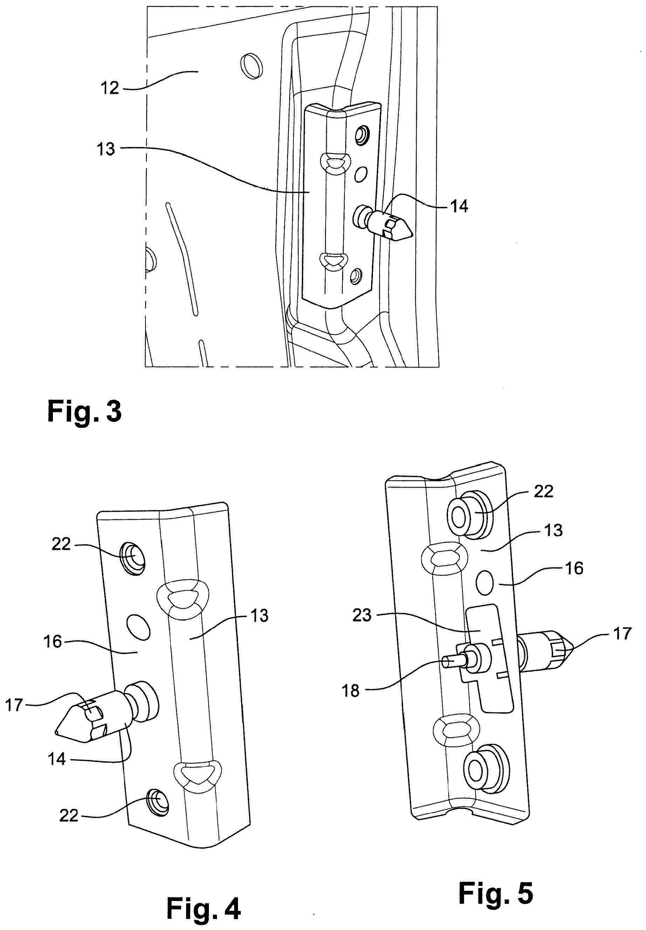

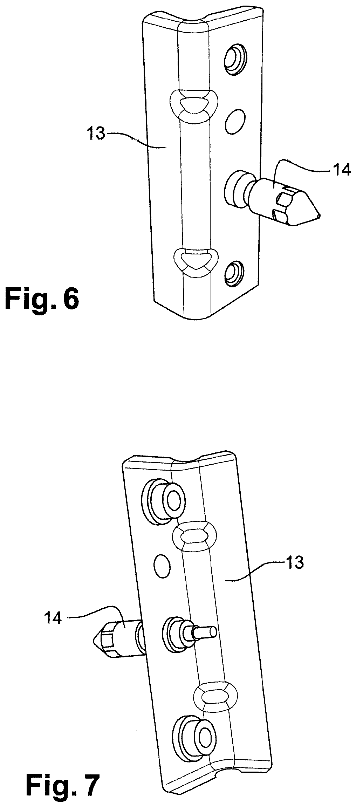

Pour fournir un système de montage de la première pièce 10 constituée par une traverse de planche de bord transversalement à l'habitacle du véhicule entre deux deuxièmes pièces structurelles constituées par les doublures de pied avant droite et gauche, il est utilisé au moins un tel dispositif de fixation. Ainsi, le dispositif de fixation (figures 4 et 5) selon l'invention peut être utilisé pour assurer uniquement la fixation de l'extrémité gauche de la première pièce 10 (figures 1 et 2), la fixation de son extrémité droite étant alors assurée (figure 3) par un dispositif de fixation (figures 6 et 7) de nature différente qui n'entre pas dans le champ de l'invention. Sur les figures 1 et 2, la doublure de pied avant gauche constitue la deuxième pièce structurelle 11, tandis que la doublure de pied avant droite est repérée 12 sur la figure 3. Toutefois, il va de soi que le système de montage de la première pièce 10 peut alternativement utiliser au moins deux dispositifs de fixation selon l'invention telle que décrite plus loin, ces deux dispositifs de fixation assurant alors respectivement la fixation des extrémités droite et gauche de la traverse de planche de bord.

Le dispositif de fixation (figures 4 et 5) utilisé du côté gauche (figures 1 et 2) dans le montage de la première pièce 10, pour assurer la fixation entre l'extrémité gauche de la traverse de planche de bord et la doublure de pied avant gauche (deuxième pièce 11 structurelle) comprend :
- un élément de renforcement 13, notamment en forme d'équerre, destiné à être fixé sur la deuxième pièce 11, notamment par soudage,
- un premier élément de positionnement 14 lié à l'élément de renforcement 13 et destiné à coopérer avec un deuxième élément de positionnement 15 solidaire de la première pièce 10 de sorte à faire occuper une position déterminée de la première pièce 10 par rapport à la deuxième pièce 11,
- un élément de fixation (non représenté) destiné à immobiliser la première pièce 10 dans ladite position déterminée.

L'équerre constitutive de l'élément de renforcement 13 est fixée directement sur la doublure de pied avant gauche. Ceci peut impliquer la création d'un embouti très marqué sur la doublure de pied avant gauche pour accueillir l'équerre servant finalement d'interface de montage par rapport à la traverse de planche de bord. L'équerre de renforcement est soudée dans cet embouti. Toutefois, tout autre moyen de fixation peut être prévu entre l'élément de renforcement 13 et la doublure de pied avant (vissage, collage, encliquetage, etc...).

Selon une caractéristique essentielle de l'invention, pour le dispositif de fixation selon l'invention utilisé du côté gauche, la liaison entre le premier élément de positionnement 14 et l'élément de renforcement 13 comprend un mécanisme de réglage en position configuré de sorte à varier entre un état de déblocage dans lequel la position du premier élément de positionnement 14 par rapport à l'élément de renforcement 13 est ajustable et un état de blocage dans lequel le premier élément de positionnement 14 est fixe par rapport à l'élément de renforcement 13.

On comprend donc que l'ensemble formé par l'équerre 13 équipée de cet élément de positionnement 14 à position ajustable embarque les fonctions de réglage en position de la traverse de planche de bord et de fixation de la traverse une fois la position ajustée, à moindre coût et à moindre poids, de manière simple et peu encombrante.

Il convient de noter que le dispositif de fixation (figures 6 et 7) exclu du champ de l'invention et utilisé du côté droit (figure 3) dans le montage de la première pièce 10, pour assurer la fixation entre l'extrémité droite de la traverse de planche de bord et la doublure de pied avant droite 12, comprend les mêmes éléments 13 et 14. Toutefois, ce dispositif de fixation se différencie de celui des figures 4 et 5 par le fait qu'il ne comprend pas de mécanisme de réglage en position du premier élément de positionnement 14 tel que décrit ci-dessus. Au contraire, le premier élément de positionnement 14 est fixe par rapport à l'élément de renforcement 13, sans possibilité de réglage en position préalablement au montage de la traverse.

Pour plus de clarté, un repère orthonormé (X, Y, Z) est associé à l'agencement, dans lequel X correspond à la direction longitudinale avant-arrière du véhicule automobile, Y correspond à sa direction transversale droite-gauche et Z correspond à sa direction verticale.

Avantageusement, le premier élément de positionnement 14 est configuré de sorte à coopérer avec le deuxième élément de positionnement 15 par un engagement réciproque suivant une première direction D1, notamment destinée à être orientée selon la direction longitudinale X de la structure du véhicule automobile. Par engagement réciproque, on entend que le premier élément de positionnement 14 vient s'engager lors du montage dans le deuxième élément de positionnement 15 solidaire de la traverse de planche de bord, et inversement. Le mécanisme de réglage en position selon l'invention offre une possibilité de débattement du premier élément de positionnement 14 relativement à l'élément de renforcement 13 dans au moins une deuxième direction différente de la première direction, notamment incluse dans un plan perpendiculaire à la première direction D1. Une telle caractéristique permet de compenser des défauts d'alignement perpendiculairement à la première direction D1 entre les premier et deuxième éléments de positionnement 14, 15 au moment de leur engagement réciproque. Suivant la conception du mécanisme de réglage, il est possible de prévoir que le premier élément de positionnement 14 ait une possibilité de débattement, dans l'état de déblocage du système, dans n'importe quelle direction incluse dans un plan P perpendiculaire à la première direction D1. Autrement dit, la position de l'élément de positionnement 14 peut être ajustée dans un plan sensiblement orienté (Y, Z).

Dans la variante illustrée, le premier élément de positionnement 14 comprend un pilote de centrage 17 venant en saillie d'un premier côté d'une paroi 16 de l'élément de renforcement 13 et configuré de sorte à pouvoir coopérer par engagement suivant la première direction D1 dans un orifice de centrage (non représenté en détail) constitutif du deuxième élément de positionnement 15. Le pilote de centrage 17 est destiné à être orienté suivant la direction X principalement. Toutefois, une organisation inversée peut être prévue, dans laquelle l'orifice de centrage serait portée par l'élément de renforcement 13 de sorte à coopérer avec un pilote de centrage porté par la traverse. La paroi 16 est notamment constituée par l'une des deux ailes à 90 degrés l'une de l'autre de l'équerre formant l'élément de renforcement 13.

En référence à la figure 5, le mécanisme de réglage comprend un élément de retenue 18 du pilote de centrage 17 sur l'élément de renforcement 13, l'élément de retenue 18 étant monté flottant par rapport à l'élément de renforcement 13. L'élément de retenue 18, notamment constitué par un écrou en prise avec une partie filetée mâle du pilote de centrage 17, est disposé dans un logement de réception présentant des dimensions, dans un plan parallèle à la paroi 16 (et au plan P défini précédemment en étant aussi perpendiculaire à la première direction D1) de l'élément de renforcement 13, telles que l'élément de retenue 18 peut se déplacer suivant une course déterminée dans le logement de réception suivant au moins une direction incluse dans ce plan. Dans cette variante particulière, le passage de l'état de déblocage vers l'état de blocage du mécanisme de réglage, ou réciproquement, s'obtient par un actionnement en rotation autour de D1 du pilote de centrage 17 par rapport à l'écrou constitutif de l'élément de retenue 18 et/ou par un actionnement en rotation autour de D1 de l'écrou constitutif de l'élément de retenue 18.

Dans la variante illustrée, le logement de réception est agencé d'un deuxième côté de la paroi 16 de l'élément de renforcement 13, opposé au premier côté duquel vient en saillie le pilote de centrage 17. L'élément de renforcement 13 comprend une lumière (non représentée) traversant toute l'épaisseur de la paroi 16 et traversée par le pilote de centrage 17 d'un côté à l'autre de la paroi 16 selon la première direction D1. Le logement de réception peut être délimité par et formé dans une pièce de guidage 23 rapportée contre la paroi 16, sur le deuxième côté. La lumière formée dans la paroi 16 doit présenter des dimensions suffisantes dans le plan perpendiculaire à D1 pour autoriser la possibilité de débattement défini ci-dessus du pilote de centrage 17.

Toutefois, il reste possible d'aménager le logement de réception du même côté de la paroi 16 que le pilote de centrage 17, de sorte que la lumière traversante peut être supprimée éventuellement.

Comme évoqué précédemment, le système de montage qui comprend un tel dispositif de montage, peut comprendre en outre une plaque de fixation 19 destinée à être solidarisée à la première pièce 10. Avantageusement, la plaque de fixation 19 est solidaire de la première pièce 10 et l'élément de renforcement 13 est fixé, notamment par soudage, à la deuxième pièce 11. Le deuxième élément de positionnement 15, qui est constitué par au moins un orifice de centrage dans lequel est engagé le premier élément de positionnement 14 selon la première direction D1, est formé dans cette plaque de fixation 19. Notamment, l'orifice de centrage porté par la traverse de planche de bord peut prendre la forme d'une lumière traversante ménagée selon X dans une paroi idoine de la plaque de fixation 19. La plaque de fixation 19 peut être solidarisée à l'extrémité de la traverse de planche de bord de toute manière adaptée, par soudage ou équivalent. D'autre part, la plaque de fixation 19 peut comprendre une ou plusieurs équerre(s) 20 destinée(s) à renforcer l'ensemble du montage dans un plan (X, Y) contre les possibilités de pivotement du pied avant gauche autour de Z en cas de chocs.

Dans un mode de réalisation particulier dépendant de la conception de l'élément de fixation appartenant au dispositif de fixation, la plaque de fixation 19 comprend au moins une ouverture 21 traversante ménagée selon X (figure 1). L'élément de fixation comprend alors au moins un élément fileté mâle (non représenté) traversant l'ouverture 21 et coopérant avec un élément fileté femelle 22 complémentaire (figure 2) solidaire de l'élément de renforcement 13. De manière générale, l'élément de fixation est configuré de sorte à fixer la plaque de fixation 19 sur l'élément de renforcement 13 de manière démontable, ici par simple dévissage de l'élément fileté mâle.

En sus du dispositif de fixation et du système de montage, l'invention porte aussi sur un agencement pour un véhicule automobile comprenant :
- la première pièce 10 structurelle de la structure du véhicule automobile, notamment la traverse de planche de bord,
- la deuxième pièce 11 structurelle de la structure, notamment une doublure de pied avant (par exemple la doublure de pied avant gauche),
- et au moins un tel dispositif de fixation et/ou un tel système de montage, assurant la fixation au moins partielle de la première pièce 10 sur la deuxième pièce 11.

Le montage de la première pièce 10 structurelle sur la deuxième pièce structurelle comprend les étapes suivantes :
- fourniture d'au moins un tel dispositif de fixation et/ou un tel système de montage,
- fixation de l'élément de renforcement 13 sur la deuxième pièce 11, notamment par soudage,
- mise en place, le mécanisme de réglage en position étant à l'état de déblocage, d'un gabarit configuré de sorte à ajuster la position du premier élément de positionnement 14 par rapport à l'élément de renforcement 13 afin de le positionner à un emplacement tel qu'une coopération ultérieure des premier et deuxième éléments de positionnement 14, 15 fasse occuper la position déterminée de la première pièce 10 par rapport à la deuxième pièce 11,
- actionnement du mécanisme de réglage vers son état de blocage.

Ces étapes sont ensuite suivies d'une étape de placement de la première pièce sur l'élément de renforcement en faisant coopérer les premier et deuxième éléments de positionnement 14, 15, puis d'une étape d'actionnement de l'élément de fixation afin de bloquer en position la première pièce 10 par rapport à la deuxième pièce 11 dans la position déterminée de la première pièce grâce à l'ajustement du premier élément de positionnement.

Bien que le principe du dispositif de fixation et du montage précédemment décrit soit particulièrement adapté au cas particulier d'une traverse de planche de bord, ce principe peut indifféremment être appliqué à toute pièce structurelle d'une structure de véhicule automobile destinée à être montée sur une autre pièce structurelle avec un positionnement précis.

La solution précédemment décrite présente les avantages suivants :
- réduction de la masse de la fonction de réglage en position, de l'ordre de 0,95 kg par rapport à des solutions existantes,
- réduction du nombre de points de soudure,
- respect des standards de réglage de la traverse, avec une possibilité de réglage du pilote de centrage et un pilotage de la première pièce par rapport à la deuxième pièce lors de son montage sur la deuxième pièce,
- réduction du prix de revient de la fonction, notamment en raison de la diminution de la masse engagée et du nombre de points de soudure,
- réduction des investissements, les outillages associés à l'élément de renforcement étant plus simples que ceux des boitiers actuels.

## Revendications

1. Agencement pour un véhicule automobile comprenant une première pièce (10) structurelle d'une structure d'un véhicule automobile, constituant une traverse de planche de bord du véhicule, une deuxième pièce (11) structurelle de ladite structure, constituant une doublure de pied avant du véhicule, et au moins un dispositif de fixation destiné à fixer la première pièce (10) structurelle sur la deuxième pièce (11) structurelle, le dispositif comprenant :
- un élément de renforcement (13), notamment en forme d'équerre, destiné à être fixé sur la deuxième pièce (11), notamment par soudage,
- un premier élément de positionnement (14) lié à l'élément de renforcement (13) et destiné à coopérer avec un deuxième élément de positionnement (15) solidaire de la première pièce (10) de sorte à faire occuper une position déterminée de la première pièce (10) par rapport à la deuxième pièce (11),
- un élément de fixation destiné à immobiliser la première pièce (10) dans ladite position déterminée,
la liaison entre le premier élément de positionnement (14) et l'élément de renforcement (13) comprenant un mécanisme de réglage en position configuré de sorte à varier entre un état de déblocage dans lequel la position du premier élément de positionnement (14) par rapport à l'élément de renforcement (13) est ajustable et un état de blocage dans lequel le premier élément de positionnement (14) est fixe par rapport à l'élément de renforcement (13), le premier élément de positionnement (14) étant configuré de sorte à coopérer avec le deuxième élément de positionnement (15) par un engagement réciproque suivant une première direction (D1), notamment destinée à être orientée selon une direction longitudinale (X) de la structure du véhicule automobile, le mécanisme de réglage offrant une possibilité de débattement du premier élément de positionnement (14) relativement à l'élément de renforcement (13) dans au moins une deuxième direction différente de la première direction (D1), notamment incluse dans un plan (P) perpendiculaire à la première direction (D1), permettant de compenser des défauts d'alignement perpendiculairement à la première direction (D1) entre les premier et deuxième éléments de positionnement (14, 15) au moment dudit engagement réciproque, **caractérisé en ce que** le premier élément de positionnement (14) comprend un pilote de centrage (17) venant en saillie d'un premier côté d'une paroi (16) de l'élément de renforcement (13) et configuré de sorte à pouvoir coopérer par engagement suivant la première direction (D1) dans un orifice de centrage correspondant au deuxième élément de positionnement (15), et **en ce que** le mécanisme de réglage comprend un élément de retenue (18) du pilote de centrage (17) sur l'élément de renforcement (13), l'élément de retenue (18) étant monté flottant par rapport à l'élément de renforcement (13), l'élément de retenue (18) étant constitué par un écrou en prise avec une partie filetée mâle du pilote de centrage (17), l'écrou étant disposé dans un logement de réception présentant des dimensions, dans un plan parallèle à ladite paroi (16) de l'élément de renforcement (13), telles que l'élément de retenue (18) peut se déplacer suivant une course déterminée dans le logement de réception suivant au moins une direction incluse dans ce plan.

2. Agencement selon la revendication 1, **caractérisé en ce que** le logement de réception est agencé d'un deuxième côté opposé de la paroi (16) de l'élément de renforcement (13) **et en ce que** l'élément de renforcement (13) comprend une lumière traversée par le pilote de centrage (17) d'un côté à l'autre de la paroi.

3. Agencement selon l'une quelconque des revendications 1 ou 2, **caractérisé en ce qu'**une plaque de fixation (19) est destinée à être solidarisée à la première pièce (10) **et en ce que** le deuxième élément de positionnement (15) est formé dans ladite plaque de fixation (19).

4. Agencement selon la revendication 3, **caractérisé en ce que** la plaque de fixation (19) comprend au moins un orifice de centrage dans lequel est engagé le premier élément de positionnement (14) selon la première direction (D1).

5. Agencement selon la revendication 4, **caractérisé en ce que** l'élément de fixation est configuré de sorte à fixer la plaque de fixation (19) sur l'élément de renforcement (13) de manière démontable.

6. Agencement selon la revendication 5, **caractérisé en ce que** la plaque de fixation (19) comprend au moins une ouverture (21) **et en ce que** l'élément de fixation comprend au moins un élément fileté mâle traversant ladite ouverture (21) et coopérant avec un élément fileté femelle (22) complémentaire solidaire de l'élément de renforcement (13).

7. Agencement selon la revendication 6, **caractérisé en ce que** la plaque de fixation (19) du système de montage est solidaire de la première pièce (10) et l'élément de renforcement (13) est fixé, notamment par soudage, à la deuxième pièce (11).

8. Véhicule automobile, comprenant au moins un agencement selon l'une quelconque des revendications précédentes.

## Patentansprüche

1. Anordnung für ein Kraftfahrzeug, umfassend ein erstes Bauteil (10) eines Kraftfahrzeugaufbaus, das einen Querträger des Armaturenbretts des Fahrzeugs darstellt, ein zweites Bauteil (11) des Aufbaus, das eine vordere Fußverkleidung des Fahrzeugs darstellt, und mindestens eine Befestigungsvorrichtung zum Befestigen des ersten Bauteils (10) an dem zweiten Bauteil (11), wobei die Vorrichtung umfasst:
- ein Verstärkungselement (13), insbesondere in Form eines Winkels, das an dem zweiten Teil (11), insbesondere durch Schweißen, zu befestigen ist,
- ein erstes Positionierungselement (14), das mit dem Verstärkungselement (13) verbunden und dazu bestimmt ist, mit einem zweiten Positionierungselement (15) zusammenzuwirken, das mit dem ersten Teil (10) fest verbunden ist, sodass das erste Teil (10) eine bestimmte Position in Bezug auf das zweite Teil (11) einnimmt,
- ein Befestigungselement, das dem Immobilisieren des ersten Teils (10) in der bestimmten Position dient,
wobei die Verbindung zwischen dem ersten Positionierungselement (14) und dem Verstärkungselement (13) einen Positionseinstellmechanismus umfasst, der dazu ausgelegt ist, zwischen einem Entriegelungszustand, in dem die Position des ersten Positionierungselements (14) in Bezug auf das Verstärkungselement (13) einstellbar ist, und einem Verriegelungszustand, in dem das erste Positionierungselement (14) in Bezug auf das Verstärkungselement (13) fixiert ist, zu wechseln, wobei das erste Positionierungselement (14) dazu ausgelegt ist, mit dem zweiten Positionierungselement (15) durch gegenseitiges Eingreifen in einer ersten Richtung (D1) zusammenzuwirken, insbesondere um in einer Längsrichtung (X) des Kraftfahrzeugaufbaus ausgerichtet zu sein, wobei der Einstellmechanismus eine Möglichkeit der relativen Verschiebung des ersten Positionierungselements (14) gegenüber dem Verstärkungselement (13) in mindestens einer zweiten Richtung, die sich von der ersten Richtung (D1) unterscheidet, insbesondere in einer Ebene (P) senkrecht zur ersten Richtung (D1), bietet, wodurch es möglich ist, Fehler der Ausrichtung senkrecht zur ersten Richtung (D1) zwischen dem ersten und zweiten Positionierungselement (14, 15) zum Zeitpunkt des gegenseitigen Eingriffs zu kompensieren, **dadurch gekennzeichnet, dass** das erste Positionierungselement (14) eine Zentrierführung (17) umfasst, die von einer ersten Seite einer Wand (16) des Verstärkungselements (13) vorsteht und so ausgebildet ist, dass sie durch Eingriff in der ersten Richtung (D1) in eine dem zweiten Positionierungselement (15) entsprechende Zentrierbohrung zusammenwirken kann, und dass der Einstellmechanismus ein Rückhalteelement (18) der Zentrierführung (17) auf dem Verstärkungselement (13) umfasst, wobei das Rückhalteelement (18) in Bezug auf das Verstärkungselement (13) gleitend gelagert ist, wobei das Rückhalteelement (18) durch eine mit einem Außengewindeabschnitt der Zentrierführung (17) in Eingriff stehende Mutter gebildet ist, wobei die Mutter in einem Aufnahmegehäuse mit Abmessungen in einer Ebene parallel zu der Wand (16) des Verstärkungselements (13) angeordnet ist, die es ermöglichen, dass sich das Rückhalteelement (18) entlang eines vorbestimmten Weges im Aufnahmegehäuse entlang mindestens einer in dieser Ebene enthaltenen Richtung bewegt.

2. Anordnung gemäß Anspruch 1, **dadurch gekennzeichnet, dass** das Aufnahmegehäuse auf einer zweiten gegenüberliegenden Seite der Wand (16) des Verstärkungselements (13) angeordnet ist und dass das Verstärkungselement (13) eine Aussparung umfasst, durch die die Zentrierführung (17) von einer Seite der Wand zur anderen verläuft.

3. Anordnung gemäß einem der Ansprüche 1 oder 2, **dadurch gekennzeichnet, dass** eine Befestigungsplatte (19) dazu bestimmt ist, mit dem ersten Teil (10) fest verbunden zu sein, und dass das zweite Positionierungselement (15) in der Befestigungsplatte (19) ausgebildet ist.

4. Anordnung gemäß Anspruch 3, **dadurch gekennzeichnet, dass** die Befestigungsplatte (19) mindestens eine Zentrierbohrung aufweist, in die das erste Positionierungselement (14) in der ersten Richtung (D1) eingreift.

5. Anordnung gemäß Anspruch 4, **dadurch gekennzeichnet, dass** das Befestigungselement so ausgebildet ist, dass es die Befestigungsplatte (19) lösbar an dem Verstärkungselement (13) befestigt.

6. Anordnung gemäß Anspruch 5, **dadurch gekennzeichnet, dass** die Befestigungsplatte (19) mindestens eine Öffnung (21) umfasst und dass das Befestigungselement mindestens ein Außengewindeelement umfasst, das durch die Öffnung (21) hindurchgeht und mit einem komplementären Innengewindeelement (22) zusammenwirkt, das mit dem Verstärkungselement (13) fest verbunden ist.

7. Anordnung gemäß Anspruch 6, **dadurch gekennzeichnet, dass** die Befestigungsplatte (19) des Montagesystems mit dem ersten Teil (10) fest verbunden ist und das Verstärkungselement (13), insbesondere durch Schweißen, mit dem zweiten Teil (11) verbunden ist.

8. Kraftfahrzeug, umfassend mindestens eine Anordnung gemäß einem der vorgenannten Ansprüche.

## Claims

1. Arrangement for a motor vehicle comprising a first structural part (10) of a structure of a motor vehicle, constituting a dashboard cross-member of the vehicle, a second structural part (11) of said structure, constituting a front foot lining of the vehicle, and at least one attaching device designed to attach the first structural part (10) on the second structural part (11), the device comprising:
- a reinforcement element (13), in particular in the form of an angle iron, which is designed to be attached on the second part (11), in particular by welding;
- a first positioning element (14), which is connected to the reinforcement element (13), and is designed to cooperate with a second positioning element (15) which is integral with the first part (10), such as to make the first part (10) occupy a determined position relative to the second part (11) ;
- an attaching element which is designed to immobilize the first part (10) in said determined position,
the connection between the first positioning element (14) and the reinforcement element (13) comprising a position-regulating mechanism which is configured such as to vary between a state of release, in which the position of the first positioning element (14) relative to the reinforcement element (13) is adjustable, and a blocking state in which the first positioning element (14) is fixed relative to the reinforcement element (13) the first positioning element (14) being configured such as to cooperate with the second positioning element (15) by reciprocal engagement according to a first direction (D1), which in particular is designed to be oriented according to a longitudinal direction (X) of the structure of the motor vehicle, the regulating mechanism providing a possibility of clearance of the first positioning element (14) relative to the reinforcement element (13) in at least a second direction which is different from the first direction (D1), and in particular is included on a plane (P) perpendicular to the first direction (D1), thus making it possible to compensate for alignment defects perpendicularly to the first direction (D1), between the first and second positioning elements (14, 15), at the moment of said reciprocal engagement, **characterized in that** the first positioning element (14) comprises a centering control system (17) which projects from a first side of a wall (16) of the reinforcement element (13), and is configured such as to be able to cooperate by engagement according to the first direction (D1) in a centering orifice corresponding to the second positioning element (15), and **in that** the regulating mechanism comprises an element (18) for retention of the centering control system (17) on the reinforcement element (13), the retention element (18) being fitted such as to float relative to the reinforcement element (13), being the retention element (18) constituted by a nut engaged with a male threaded part of the centering control system (17), the nut being disposed in a receipt seat which has dimensions, on a plane parallel to said wall (16) of the reinforcement element (13), such that the retention element (18) can be displaced according to a determined course, in the receipt seat, according to at least one direction included on this plane.

2. Arrangement according to Claim 1, **characterized in that** the receipt seat is arranged on a second side opposite the wall (16) of the reinforcement element (13), and **in that** the reinforcement element (13) comprises an aperture through which the centering control system (17) passes, from one side to the other of the wall.

3. Arrangement according to either of Claims 1 and 2, **characterized in that** an attaching plate (19) is designed to be rendered integral with the first part (10), and **in that** the second positioning element (15) is formed in said attaching plate (19) .

4. Arrangement according to Claim 3, **characterized in that** the attaching plate (19) comprises at least one centering orifice, in which the first positioning element (14) is engaged according to the first direction (D1).

5. Arrangement according to Claim 4, **characterized in that** the attaching element is configured such as to attach the attaching plate (19) on the reinforcement element (13) in a detachable manner.

6. Arrangement according to Claim 5, **characterized in that** the attaching plate (19) comprises at least one opening (21), and **in that** the attaching element comprises at least one male threaded element which passes through said opening (21) and cooperates with a complementary female threaded element (22) which is integral with the reinforcement element (13).

7. Arrangement according to Claim 6, **characterized in that** the attaching plate (19) of the fitting system is integral with the first part (10), and the reinforcement element (13) is attached, in particular by welding, on the second part (11).

8. Motor vehicle comprising at least one arrangement according to any one of the preceding claims.
